# EUROPÄISCHE PATENTSCHRIFT

(11) **EP 2 310 730 B1**
(45) Veröffentlichungstag und Bekanntmachung des Hinweises auf die Patenterteilung: **02.05.2012**
(21) Anmeldenummer: 08875041.9
(22) Anmeldetag: 26.11.2008
(51) Int. Cl.: F16K 31/165

(54) **VENTIL MIT KONTRAKTIONSANTRIEB**
VALVE WITH CONTRACTION DRIVE
SOUPAPE À ENTRAÎNEMENT PAR CONTRACTION

(43) Veröffentlichungstag der Anmeldung: 20.04.2011
(73) Patentinhaber: FESTO AG & Co. KG, 73734 Esslingen (DE)
(72) Erfinder: WIRTL, Hannes, 86956 Schongau (DE); MAICHL, Martin, 73084 Salach (DE)
(74) Vertreter: Abel, Martin
(86) Internationale Anmeldenummer: PCT/EP2008/010004
(87) Internationale Veröffentlichungsnummer: WO 2010/060441

(56) Entgegenhaltungen:
- GB-A- 1 402 266
- JP-A- 2 076 985
- US-A1- 2007 131 282

## Beschreibung

Die Erfindung betrifft ein Ventil, mit einem Ventilkopf, in dem Ventilkanäle ausgebildet sind, denen zur Steuerung der Fluidverbindung ein bewegliches Ventilglied zugeordnet ist, und mit einer in Achsrichtung einer Hauptachse von dem Ventilkopf wegragenden Betätigungseinheit, die einen in Achsrichtung der Hauptachse ausgerichteten fluidbetätigten Linearantrieb enthält, dessen linear bewegliches Abtriebsteil antriebsmäßig mit dem Ventilglied zusammenwirkt und durch Federmittel in eine das Ventilglied in einer Schließstellung haltenden Grundstellung vorgespannt ist.

Ein aus der US 2007/0131282 A1 bekanntes Ventil dieser Art enthält als fluidbetätigten Linearantrieb einen Pneumatikzylinder mit Kolben und Kolbenstange, wobei der Kolben durch Federmittel vorgespannt ist, so dass die Kolbenstange als Abtriebsteil ständig federbelastet auf ein bewegliches Ventilglied einwirkt, um dieses in einer Schließstellung zu halten. Zum Öffnen einer Fluidverbindung wird der Kolben mit Druckluft beaufschlagt, so dass er zusammen mit der Kolbenstange entgegen der Federkraft ausgelenkt wird und das Ventilglied in die Offenstellung umschalten kann.

Soll das Ventil über kompakte Abmessungen verfügen, ergeben sich starke Einschränkungen hinsichtlich der Beherrschbarkeit des Druckes des zu steuernden Fluides. Zwar könnte durch starke Federmittel eine hohe Schließkraft generiert werden, zu deren Überwindung es jedoch eines großen Kolbenquerschnittes bedürfte, was zu Lasten der Querschnittsabmessungen des Linearantriebes ginge. Denkbar wäre auch eine Hintereinanderschaltung mehrerer Pneumatikzylinder. Dies hätte jedoch große Längenabmessungen zur Folge. Außerdem erhöhte sich dadurch die Anzahl der dynamisch abzudichtenden Komponenten und damit auch die Verschleißanfälligkeit der Anordnung.

Der Erfindung liegt die Aufgabe zugrunde, ein kompakt bauendes und verschleißarmes Ventil der eingangs genannten Art zu schaffen, mit dem sich auch hohe Fluiddrücke steuern lassen.

Zur Lösung dieser Aufgabe ist vorgesehen, dass der Linearantrieb ein Kontraktionsantrieb ist, der einen sich axial zwischen zwei Kopfstücken erstreckenden Kontraktionsschlauch aufweist, der bei Fluidbeaufschlagung eines von ihm umschlossenen Beaufschlagungsraumes eine Längenkontraktion erfährt, wobei das eine, erste Kopfstück ortsfest bezüglich des Ventilkopfes abgestützt ist, so dass die Längenkontraktion des Kontraktionsschlauches ein lineares Bewegen des als Abtriebsteil fungierenden anderen, zweiten Kopfstückes in eine ein Verlagern des Ventilgliedes in eine Offenstellung hervorrufende Arbeitsstellung bewirkt.

Bei dem Kontraktionsantrieb kann es sich beispielsweise um eine Betätigungseinrichtung der Art handeln, wie sie in der WO 00/61952 A1 beschrieben ist. Eine als Kontraktionsschlauch bezeichenbare schlauchförmige Membran verfügt über einen gummielastischen Schlauchkörper mit eingebetteter Strangstruktur und hat die Eigenschaft, bei Innendruckbeaufschlagung axial zu kontrahieren. Hierbei zieht er zwei an seinen Stirnseiten angeordnete Kopfstücke zueinander. Bei der Erfindung ist das eine, erste Kopfstück ortsfest bezüglich des Ventilkopfes abgestützt, so dass es bei Aktivierung des Kontraktionsantriebes seine Relativposition bezüglich des Ventilkopfes beibehält und nur das andere, zweite Kopfstück verlagert wird. Letzteres fungiert als das mit dem Ventilglied zusammenwirkende Abtriebsteil des Linearantriebes und ermöglicht in einer oder ggf. auch mehreren an das Kopfstück herangezogenen Arbeitsstellungen ein Bewegen des Ventilgliedes in eine den Fluiddurchgang freigebende Offenstellung. Wie sich herausgestellt hat, eignet sich der Kontraktionsantrieb für die vorliegende Anwendung besonders gut, weil er zwar nur verhältnismäßig geringe Hübe ausführen kann, jedoch schon von Beginn an mit einer sehr hohen Betätigungskraft aufwartet. Somit lassen sich selbst Federmittel mit hoher Vorspannung komprimieren, so dass das Ventil, insbesondere in Verbindung mit prozesstechnischen Anwendungen, unter Einhaltung kleiner Abmessungen für die Steuerung hoher Fluiddrücke einsetzbar ist. Ein weiterer Vorteil besteht darin, dass der Kontraktionsantrieb ohne dynamische Dichtstellen arbeitet, so dass er selbst unter hoher Belastung keinem Dichtungsverschleiß unterliegt. Dies gewährleistet hohe Standzeiten des Ventils und geringe Stillstandszeiten der damit ausgestatteten Anlagen, die somit sehr wirtschaftlich betrieben werden können.

Vorteilhafte Weiterbildungen der Erfindung gehen aus den Unteransprüchen hervor.

Das Ventil wird vorzugsweise als 2/2-Wegeventil realisiert, kann aber prinzipiell auch mit anderer Funktionalität ausgelegt werden. Von Vorteil ist jedenfalls eine Ausgestaltung als Sitzventil, bei der das Ventilglied in seiner Schließstellung auf einem am Ventilkopf angeordneten Ventilsitz aufliegt und bei deaktiviertem Kontraktionsantrieb aufgrund der Wirkung der Federmittel in dieser Schließstellung gehalten wird.

Die Federmittel beaufschlagen einerseits das bewegliche zweite Kopfstück. Andererseits könnten sich die Federmittel prinzipiell am Ventilkopf oder an einer sonstigen beliebigen, mit dem Ventilkopf verbundenen Komponente abstützen. Besonders zweckmäßig ist jedoch eine Ausgestaltung, bei der die Federmittel zwischen den beiden Kopfstücken wirksam sind, da dies eine besonders kompakte Anordnung zulässt. Insbesondere wird auf eine Anordnung zurückgegriffen, bei der die Federmittel in dem vom Kontraktionsschlauch umschlossenen Raum im Innern des Kontraktionsantriebes untergebracht sind, zweckmäßigerweise direkt in dem einem Fluidaustausch unterliegenden Beaufschlagungsraum.

Es ist des Weiteren vorteilhaft, wenn das zur Abstützung des Linearantriebes bezüglich des Ventilkopfes genutzte erste Kopfstück - zumindest beim Zusammenbau des Ventils - variabel in verschiedenen Arbeitspositionen längs der Hauptachse positionierbar ist. Dadurch kann der Kontraktionsantrieb beim Zusammenbau des Ventils optimal justiert werden, was wegen des verhältnismäßig geringen Hubes des Abtriebsteils besonders vorteilhaft ist. Vorzugsweise verfügt das erste Kopfstück über einen Grundkörper, der in Achsrichtung der Hauptachse relativ zum Ventilkopf verstellbar und insbesondere stufenlos ortsfest positionierbar ist, um die genannte Einstellung der Arbeitsposition zu erhalten.

Insbesondere in diesem Zusammenhang ist es von Vorteil, wenn sich die Federmittel seitens des ersten Kopfstückes nicht direkt an dem Grundkörper abstützen, sondern an einem diesbezüglich separaten Stützkörper, der seinerseits relativ zum Grundkörper in Achsrichtung der Hauptachse verstellbar ist, so dass er sich, vorzugsweise stufenlos, in unterschiedlichen axialen Arbeitspositionen bezüglich des Grundkörpers ortsfest positionieren lässt.

Durch die somit gegebene duale Verstellmöglichkeit des ersten Kopfstückes wird eine optimale Montage und Justierung ohne Relaxationsgefahr für den Kontraktionsschlauch ermöglicht. Vor der Montage des Kontraktionsantriebes im Ventil können durch entsprechende Einstellung des Stützkörpers die Federmittel entspannt werden, so dass der Kontraktionsschlauch keiner Zugspannung unterliegt, die vor der Montage eine axiale Dehnung und Relaxation zur Folge haben könnte. Eine solche Relaxation würde zu Lasten der später im Betrieb erzielbaren Stellkräfte gehen. Erst wenn der Kontraktionsantrieb installiert und durch die axiale Positionierbarkeit des Grundkörpers so justiert ist, dass das zweite Kopfstück das Ventilglied gerade so in der Schließstellung hält, stellt man die gewünschte Vorspannung der Federmittel durch axiales Justieren des Stützkörpers ein. Die sich hierbei aufbauende Vorspannkraft bewirkt keine Relaxation, weil die Federkräfte in der Schließstellung nicht in den Kontraktionsschlauch eingeleitet, sondern in den das Ventilglied abstützenden Ventilkopf abgeleitet werden.

Der Kontraktionsantrieb ist zweckmäßigerweise in einem vom Ventilkopf wegragenden, insbesondere rohrförmigen Hüllgehäuse aufgenommen. Dieses Hüllgehäuse kann zwar prinzipiell mit fensterartigen Durchbrechungen ausgestattet sein, um beispielsweise eine Funktionskontrolle zu ermöglichen, verfügt jedoch zweckmäßigerweise über eine vollständig geschlossene Wandung, was den Einsatz in unwirtlicher Umgebung begünstigt.

Vorzugsweise wird ein Hüllgehäuse mit im Wesentlichen kreiszylindrischer Außenkontur genutzt. Auf der dem Ventilkopf entgegengesetzten Stirnseite kann es mittels eines separaten Abschlussdeckels verschlossen sein.

Das Hüllgehäuse kann eine Schutzfunktion bezüglich den in ihm angeordneten Komponenten ausüben. Ferner kann es in vorteilhafter Weise zur ortsfesten Abstützung des ersten Kopfstückes des Kontraktionsantriebes bezüglich dem Ventilkopf herangezogen werden, indem das erste Kopfstück an ihm fixiert wird.

Zur fluidischen Ansteuerung des Kontraktionsantriebes ist das Ventil zweckmäßigerweise mit einer elektrisch betätigbaren Steuerventileinrichtung ausgestattet. Diese ist Bestandteil der Betätigungseinheit, so dass sie vorzugsweise unmittelbar dem Kontraktionsantrieb räumlich zugeordnet ist. Zu Gunsten sehr kompakter Abmessungen handelt es sich insbesondere um eine piezoelektrische Steuerventileinrichtung.

Der Kontraktionsantrieb und die Steuerventileinrichtung sind vorzugsweise zu einer Baueinheit zusammengefasst, die zur besseren Unterscheidung als Antriebs-Baueinheit bezeichnet sei. Diese kann insbesondere nach Art einer Patrone von der dem Ventilkopf entgegengesetzten Stirnseite her in das rohrförmige Hüllgehäuse eingesetzt sein, beispielsweise eingesteckt oder eingeschraubt. Die patronenartige Baueinheit hat den Vorteil einer einfachen Endmontage und eines schnellen Austausches im Falle des Defektes einer Komponente.

Enthält die Betätigungseinheit in vorteilhafter Weiterbildung auch eine der Ansteuerung der Steuerventileinrichtung dienende Ansteuerelektronik, ist selbige zweckmäßigerweise ebenfalls als Bestandteil der Antriebs-Baueinheit ausgebildet.

Die Ansteuerelektronik ist beispielsweise in der Lage, Signale einer die momentane Stellung des zweiten Kopfstückes aufnehmenden Detektionseinrichtung zu verarbeiten, um die Stellung des zweiten Kopfstückes und mithin des Ventilgliedes zu kontrollieren. Es besteht insbesondere die Möglichkeit einer elektronischen Durchflussregelung, in welchem Falle es von Vorteil ist, wenn die Steuerventileinrichtung vom Typ eines Proportionalventils ist. Somit kann die Arbeitsstellung des zweiten Kopfstückes stufenlos variabel vorgegeben werden, um unterschiedliche Offenstellungen des Ventilgliedes und dementsprechend unterschiedliche momentane Durchflussraten für das zu steuernde Fluid vorzugeben.

Die Steuerventileinrichtung kann beispielsweise als 3/3-Piezo-Wegeventil ausgeführt sein, wie es in der EP 1564464 B1 beschrieben ist.

Als besonders zweckmäßig wird es angesehen, das erste Kopfstück als Träger für die Steuerventileinrichtung und die gegebenenfalls vorhandene Ansteuerelektronik zu nutzen.

Nachfolgend wird die Erfindung anhand der beiliegenden Zeichnung näher erläutert. In dieser zeigen:
- Figur 1: einen Längsschnitt durch eine bevorzugte Ausführungsform des erfindungsgemäßen Ventils in der Schließstellung des Ventilgliedes,
- Figur 2: das Ventil aus Figur 1 in einer Offenstellung des Ventilgliedes und
- Figur 3: eine Draufsicht auf das Ventil mit axialer Blickrichtung gemäß Pfeil III aus Figur 1.

Das in seiner Gesamtheit mit Bezugsziffer 1 bezeichnete Ventil wird insbesondere als Prozessventil genutzt, um die Strömung eines Prozessgases oder sonstigen Fluides zu steuern. Im konkreten Fall des Ausführungsbeispiels handelt es sich um ein 2/2-Wegeventil, mit dem sich der Fluiddurchgang durch zwei Ventilkanäle 2, 3 wahlweise absperren oder freigeben lässt, wobei die Freigabe insbesondere mit variabler Strömungsrate möglich ist, so dass es sich im eigentlichen Sinne um ein Proportionalventil handelt. Allerdings kann das Ventil 1 auch für beliebige andere Anwendungen eingesetzt werden und auch als einfaches Schaltventil.

Das Ventil 1 verfügt über einen beim Ausführungsbeispiel einstückigen Ventilkopf 4, der von einem Einlass-Ventilkanal 2 und einem Auslass-Ventilkanal 3 durchsetzt ist. Über den Einlass-Ventilkanal 2 wird das zu steuernde Fluid eingespeist, über den Auslass-Ventilkanal 3 wird es zum Ort des Bedarfes weitergeleitet. Beide Ventilkanäle 2, 3 münden gemeinsam, insbesondere nebeneinander liegend, in eine Ventilkammer 5, wo der Mündung des Einlass-Ventilkanals 2 ein bewegliches Ventilglied 6 gegenüberliegt.

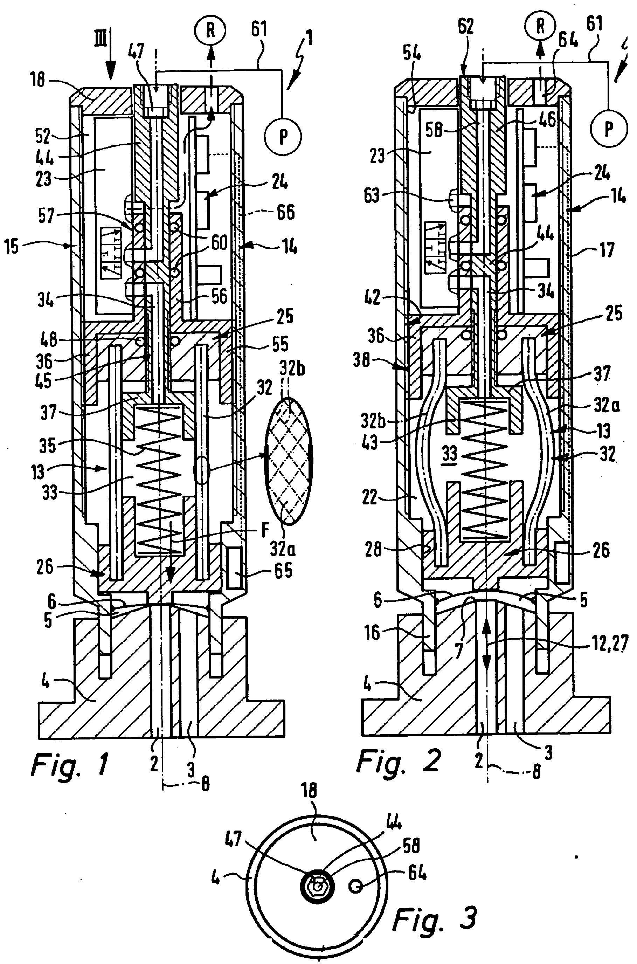

Die der Ventilkammer 5 zugewandte Mündung des Einlass-Ventilkanals 2 ist von einem am Ventilkopf 4 ausgebildeten Ventilsitz 7 umrahmt. Das Ventilglied 6 kann eine aus Figur 1 ersichtliche Schließstellung einnehmen, in der es mit Vorspannung an dem Ventilsitz 7 anliegt, um die Verbindung zwischen dem Einlass-Ventilkanal 2 und der Ventilkammer 5 und somit auch zu dem Auslass-Ventilkanal 3 zu unterbrechen. Darüber hinaus kann das Ventilglied 6 eine vom Ventilsitz 7 abgehobene Offenstellungen einnehmen, von denen eine in Figur 2 angedeutet ist. Es sind unterschiedliche Offenstellungen möglich, die sich in dem zwischen dem Ventilsitz 7 und dem Ventilglied 6 eingenommenen Abstand voneinander unterscheiden, wobei sie unterschiedlich große Strömungsquerschnitte freigeben, um eine variable Durchflussrate des Fluides zu ermöglichen.

Das Ventil 1 weist eine beim Ausführungsbeispiel mit seiner Längsachse zusammenfallende Hauptachse 8 auf. Die Mündung des Einlass-Ventilkanals 2 ist in Achsrichtung dieser Hauptachse 8 orientiert. Gleiches gilt für die durch einen Doppelpfeil verdeutlichte Umschaltbewegung 12 des Ventilgliedes 6. Letzteres besteht im Übrigen aus einem elastisch biegbaren Metallplättchen, kann aber auch anders strukturiert sein.

Die Stellung des Ventilgliedes 6 wird durch einen Linearantrieb in Gestalt eines Kontraktionsantriebes 13 vorgegeben. Dieser ist Bestandteil einer gesamthaft mit Bezugsziffer 14 bezeichneten Betätigungseinheit, die seitlich an dem Ventilkopf 4 befestigt ist. Die Betätigungseinheit 14 hat eine längliche, schlanke Gestalt, vorzugsweise säulenförmig, wobei ihre Längsachse mit der Hauptachse 8 zusammenfällt.

Der ebenfalls längliche Gestalt aufweisende Kontraktionsantrieb 13 ist ebenfalls in Achsrichtung der Hauptachse 8 ausgerichtet und insbesondere koaxial zu dieser platziert.

Vorzugsweise beinhaltet die Betätigungseinheit 14 ein in Achsrichtung der Hauptachse 8 ausgerichtetes Hüllgehäuse 15, das mit seinem einen, vorderen Endabschnitt 16 am Ventilkopf 4 befestigt ist, beispielsweise durch eine Schraubverbindung oder durch Verkleben oder Verschweißen. Zweckmäßigerweise ist das Hüllgehäuse 15 rohrförmig ausgebildet. Das Hüllgehäuse 15 hat bevorzugt eine im Wesentlichen hohlzylindrische, zu der Hauptachse 8 koaxiale Seitenwand 17 und ist an der dem Ventilkopf 4 axial entgegengesetzten Rückseite zweckmäßigerweise durch einen stirnseitig an die Seitenwand 17 angesetzten Abschlussdeckel 18 lösbar verschlossen. Auf diese Weise umgrenzt das Hüllgehäuse 15 einen Aufnahmeraum 22, in dem, axial im Anschluss an den Ventilkopf 4, der Kontraktionsantrieb 13 untergebracht ist. Die Ventilkammer 5 liegt zweckmäßigerweise axial zwischen dem Ventilkopf 4 und dem Kontraktionsantrieb 13.

Der Kontraktionsantrieb 13 wird fluidisch betätigt. Die hierzu erforderliche Zu- und Abfuhr des Betätigungsfluides wird zweckmäßigerweise durch eine elektrisch betätigbare Steuerventileinrichtung 23 gesteuert, die wie der Kontraktionsantrieb 13 in dem Aufnahmeraum 22 untergebracht ist. An der Betätigung der Steuerventileinrichtung 23 wirkt zweckmäßigerweise eine vorzugsweise ebenfalls in dem Aufnahmeraum 22 untergebrachte Ansteuerelektronik 24 mit.

Der Kontraktionsantrieb 13 verfügt über ein erstes stirnseitiges Kopfstück 25, das im Aufnahmeraum 22 an der Seitenwand 17 des Hüllgehäuses 15 ortsfest fixiert ist. Auf diese Weise ergibt sich mittelbar auch eine ortsfeste Abstützung bezüglich des Ventilkopfes 4. Bei Betätigung des Kontraktionsantriebes 13 behält das erste Kopfstück 25 seine bezüglich des Ventilkopfes 4 in Achsrichtung der Hauptachse 3 eingenommene Relativposition bei.

Ein stirnseitiges zweites Kopfstück 26 des Kontraktionsantriebes 13 ist dem ersten Kopfstück 25 mit Abstand axial vorgelagert und liegt zwischen dem ersten Kopfstück 25 und dem Ventilkopf 4. Es ist insbesondere in unmittelbarer Nähe des Ventilkopfes 4 platziert. Das zweite Kopfstück 26 bildet das gemäß Doppelpfeil 27 (Arbeitsbewegung) linear in Achsrichtung der Hauptachse 8 hin und her bewegbare Abtriebsteil des Kontraktionsantriebes 13. Die Arbeitsbewegung 27 findet relativ zum Ventilkopf 4 und folglich auch relativ zum Hüllgehäuse 15 statt. Zweckmäßigerweise ist das zweite Kopfstück 26 am Innenumfang 28 der vorzugsweise hülsenförmigen Seitenwand 17 linear verschiebbar geführt. Hervorgerufen wird die Arbeitsbewegung 27 mittels Fluidkraft.

Axial zwischen den beiden Kopfstücken 25, 26 erstreckt sich ein Kontraktionsschlauch 32. Dieser ist an beiden Kopfstücken 25, 26 abgedichtet befestigt und außerdem in einer Weise, dass er zwischen den beiden Kopfstücken 25, 26 Zugkräfte übertragen kann.

Gemeinsam mit den beiden Kopfstücken 25, 26 umschließt der Kontraktionsschlauch 32 einen im Folgenden als Beaufschlagungsraum 33 bezeichneten Innenraum. Dieser ist hermetisch dicht abgeschlossen. Ein Steuerkanal 34 mündet in den Beaüfschlagungsraum 33 ein und ermöglicht eine bedarfsgemäße Einspeisung oder Abfuhr des schon erwähnten Betätigungsfluides.

Im deaktivierten Zustand, wenn der Beaufschlagungsraum 33 drucklos ist, verfügt der Kontraktionsschlauch 32 über die aus Figur 1 ersichtliche hohlzylindrische, gestreckte Ausgangsgestalt. Wird der Beaufschlagungsraum 33 hingegen mit dem Betätigungsfluid beaufschlagt und einem atmosphärischen Überdruck ausgesetzt, weitet sich der Kontraktionsschlauch 32 gemäß Figur 2 radial auf, wobei diese radiale Aufweitung einhergeht mit einer axialen Verkürzung und einer damit verbundenen gegenseitigen axialen Annäherung der beiden Kopfstücke 25, 26. Da das erste Kopfstück 25 ortsfest abgestützt ist, bewegt sich lediglich das zweite Kopfstück 26.

Das Betriebsverhalten des Kontraktionsschlauches 32 wird durch einen besonderen strukturellen Aufbau begünstigt. Dieser äußert sich exemplarisch in einem gummielastischen Schlauchkörper 32a, in dessen Wandung koaxial eine Strangstruktur 32b eingebettet ist. Die Strangstruktur 32b umfasst eine Vielzahl von hoch zugfesten, zugleich aber biegeflexiblen Strängen, die insbesondere in einer Überkreuzkonfiguration verlegt sind, so dass sich ein aus dem vergrößerten Detail der Figur 1 ersichtliches Rautenmuster ergibt. Wird der Schlauchkörper 32a aufgeweitet, verändern sich die Winkel in dem gitterartigen Rautenmuster, was zu der schon erwähnten Längenkontraktion führt. Der konkrete Aufbau des Kontraktionsschlauches 32 kann insbesondere dem in der WO 00/61952 A1 beschriebenen entsprechen.

Das zweite Kopfstück 26 arbeitet indirekt oder - wie beim Ausführungsbeispiel - direkt antriebsmäßig mit dem Ventilglied 6 zusammen. Ist der Kontraktionsantrieb 13 deaktiviert, drückt das zweite Kopfstück 26 das Ventilglied 6 in die Schließstellung gegen den Ventilsitz 7. Die hierbei von dem zweiten Kopfstück 26 eingenommene Stellung sei als Grundstellung bezeichnet.

Damit das über den Einlass-Ventilkanal 2 unter hohem Druck zuströmende, zu steuernde Fluid das Ventilglied 6 nicht vom Ventilsitz 7 abheben kann, unterliegt das zweite Kopfstück 26 auch in der Grundstellung einer durch Federmittel 35 hervorgerufenen Vorspannung. Die durch einen Pfeil angedeutete Federkraft F ist axial in Richtung des Ventilgliedes 6 beziehungsweise des Ventilsitzes 7 orientiert. Die Federmittel 35 sind so ausgelegt, dass die durch sie generierte Federkraft ausreicht, um das zweite Kopfstück 26 bei den im Betrieb auftretenden Fluiddrücken in der Grundstellung festhalten zu können. Somit ist bei deaktiviertem Kontraktionsantrieb 13 zuverlässig die Schließstellung des Ventilgliedes 6 gewährleistet. Außerdem erfolgt ein umgehendes Umschalten in die Schließstellung, sollte im Betrieb des Ventils 1 aufgrund einer Störung der Innendruck im Beaufschlagungsraum 33 abfallen.

Zum mehr oder weniger starken Freigeben der Fluidverbindung zwischen dem Einlass-Ventilkanal 2 und dem Auslass-Ventilkanal 3 wird über den Steuerkanal 34 Betätigungsfluid in den Beaufschlagungsraum 33 eingespeist. Die Folge dieser Einspeisung ist ein Auslenken des zweiten Kopfstückes 26 aus seiner Grundstellung in Richtung des ersten Kopfstückes 25, wobei die Federkraft F überwunden wird. Da das Ventilglied 6 somit nicht mehr an den Ventilsitz 7 angedrückt wird, wird es vom zuströmenden Fluid in eine Offenstellung abgehoben. Der freigegebene Strömungsquerschnitt hängt dabei vom Hub des zweiten Kopfstückes 26 ab. Dieser lässt sich über die Höhe des in den Beaufschlagungsraum 33 eingespeisten Betätigungsdruckes beeinflussen und nach Bedarf vorgeben. Folglich ist eine stetige Regulierung der Strömungsrate des zu steuernden Fluides möglich.

Die Federmittel 35 wirken im Sinne eines axial voneinander weg gerichteten Auseinanderdrückens auf die beiden Kopfstücke 25, 26 ein. Hierzu sind sie beim Ausführungsbeispiel platzsparend im Innern des Beaufschlagungsraumes 33 untergebracht. Die Federmittel 35 enthalten zweckmäßigerweise mindestens eine Druckfeder, beispielsweise eine Schraubendruckfeder, die sich koaxial zu der Hauptachse 8 erstrecken kann, wobei sie mit ihren beiden Endabschnitten auf je eines der beiden Kopfstücke 25, 26 einwirkt.

Um eine optimale Justierung des zweiten Kopfstückes 26 zu ermöglichen, ist der Kontraktionsantrieb 13 mit zweifacher Verstellmöglichkeit im Innern des Hüllgehäuses 15 untergebracht. In diesem Zusammenhang ist das erste Kopfstück 25 in vorteilhafter Weise mehrteilig ausgebildet und verfügt über einen Grundkörper 36 sowie einen diesbezüglich separaten Stützkörper 37.

Über den Grundkörper 36 erfolgt die ortsfeste Fixierung des ersten Kopfstückes 25 bezüglich des Hüllgehäuses 15 und somit auch bezüglich des Ventilkopfes 4, allerdings mit der Möglichkeit einer axialen Justierung in Achsrichtung der Hauptachse 8. Diese Verstellmöglichkeit erlaubt ein axial ortsfestes Positionieren des ersten Kopfstückes 25 in verschiedenen axialen Arbeitspositionen. Die Einstellung kann stufenlos erfolgen. Ermöglicht wird sie beim Ausführungsbeispiel dadurch, dass der Grundkörper 36 über ein Außengewinde 38 verfügt, mit dem er mit einem am Innenumfang 28 der Seitenwand 17 ausgebildeten Innengewinde 42 in Schraubeingriff steht.

Da die Arbeitsposition des Grundkörpers 36 in der Regel nur ein einziges Mal, beim Zusammenbau des Ventils 1, eingestellt wird, könnte die axiale Justierbarkeit des Grundkörpers 36 auch anders realisiert werden. Beispielsweise wäre es denkbar, Grundkörper 36 und Hüllgehäuse 15 so aufeinander abzustimmen, dass sich der Grundkörper 36 an der gewünschten Position im Presssitz befestigen lässt. Denkbar wäre auch ein messtechnisch unterstütztes Positionieren an der gewünschten Stelle und ein anschließendes Fixieren durch ein Sicherungselement oder durch Klebstoff.

Der Grundkörper 36 trägt den schon erwähnten Stützkörper 37. Letzterer ist dabei so am Grundkörper 36 festsetzbar, dass er sich diesbezüglich axial ortsfest abstützt. Der Stützkörper 37 ragt zweckmäßigerweise in den Beaufschlagungsraum 33 hinein und verfügt dort über einen Stützteller 43, an dem sich die Federmittel 35 mit ihrem dem ersten Kopfstück 25 zugewandten Endabschnitt abstützen. Die Gegenkraft wird über den Stützkörper 37, den Grundkörper 36 und das Hüllgehäuse 15 hinweg letztlich vom Ventilkopf 4 aufgebracht.

Die bezüglich des Grundkörpers 36 in axialer Richtung eingenommene Relativposition des Stützkörpers 37 ist allerdings variabel einstellbar. Mit anderen Worten kann der Stützkörper 37 seinerseits in Achsrichtung der Hauptachse 8 in verschiedenen Arbeitspositionen relativ zum Grundkörper 36 positioniert werden. Somit wird deutlich, dass durch bezüglich des Grundkörpers 36 erfolgendes axiales Verstellen des Stützkörpers 37 die Vorspannung der Federmittel 35 variiert werden kann.

Das axiale Verstellen des Stützkörpers 37 kann beim Ausführungsbeispiel durch eine Drehbetätigung erfolgen. Der Stützkörper 37 verfügt über einen Einstellstößel 44, der den Grundkörper 36 koaxial mit Gewindeeingriff 45 durchsetzt und an der dem Ventilkopf 4 entgegengesetzten Rückseite mit einem Betätigungsabschnitt 46 aus dem Grundkörper 36 und zweckmäßigerweise auch aus dem Hüllgehäuse 15 herausragt.

An dem Betätigungsabschnitt 46 ist eine beispielsweise von einem stirnseitigen Innenmehrkant gebildete Betätigungskontur 47 ausgebildet, die das Ansetzen eines Betätigungswerkzeuges ermöglicht, so dass der Stützkörper 37 wahlweise im oder entgegen dem Uhrzeigersinn verdrehbar ist, wobei er sich je nach Drehrichtung entweder weiter in den Beaufschlagungsraum 33 hineinschraubt oder herausschraubt.

Der Einbau des Kontraktionsantriebes 13 in das Hüllgehäuse 15 kann insbesondere folgendermaßen vonstatten gehen:

Solange der Kontraktionsantrieb 13 noch nicht eingebaut ist, wird der Stützkörper 37 so eingestellt, dass die Federmittel 35 noch keine oder zumindest keine relevante Vorspannkraft zwischen den beiden Kopfstücken 25, 26 ausüben. Dadurch unterliegt der Kontraktionsschlauch 32 keiner axialen Vorspannung und folglich auch keiner axialen Relaxation. In diesem Zustand wird der Kontraktionsantrieb 13 so im Hüllgehäuse 15 positioniert, dass das zweite Kopfstück 26 das Ventilglied 6 ohne Vorspannung in Kontakt mit dem Ventilglied 6 hält. Diese Justierung ist aufgrund der zumindest anfänglichen Verstellbarkeit zwischen Grundkörper 36 und Hüllgehäuse 15 gewährleistet. Es versteht sich, dass hierbei im Einlass-Ventilkanal 2 noch kein Fluid ansteht. Durch diese Einstellmaßnahme ist das zweite Kopfstück 26 in seiner Null-Lage positioniert, die einen maximalen Hub bei Aktivierung des Kontraktionsantriebes 13 gewährleistet.

Im nächsten Schritt wird durch axiales Verstellen des Stützkörpers 37 die gewünschte Vorspannung der Federmittel 35 eingestellt. Da sich das Ventilglied 6 hierbei weiterhin an dem Ventilsitz 7 abstützt, wird die gesamte Federkraft in den Ventilkopf 4 eingeleitet und wirkt nicht als Zugkraft auf den Kontraktionsschlauch 32. Somit ist Letzterer auch im eingebauten Zustand des Kontraktionsantriebes 13 vor axialer Relaxation gefeit.

Es versteht sich, dass im Durchdringungsbereich von Stützkörper 37 und Grundkörper 36 zweckmäßigerweise geeignete Abdichtmittel 48 vorgesehen werden, die eine Leckage verhindern. Sie unterliegen während des sich anschließenden Normalbetriebes des Kontraktionsantriebes 13 einer lediglich statischen Beanspruchung.

Von Vorteil ist es, wenn außer dem Kontraktionsantrieb 13 auch noch die Steuerventileinrichtung 23 und die eventuell vorhandene Ansteuerelektronik 24 in dem Aufnahmeraum 22 untergebracht sind. Beim Ausführungsbeispiel befinden sie sich in dem sich rückseitig, auf der dem Ventilkopf 4 entgegengesetzten Axialseite an das erste Kopfstück 25 anschließenden rückseitigen Raumabschnitt 52 des Aufnahmeraumes 22. Dort sind sie zur Umgebung hin abgeschirmt und vor Beschädigung und Verunreinigung geschützt, ebenso wie auch der Kontraktionsantrieb 13.

In diesem Zusammenhang ist es von Vorteil, wenn die Seitenwand 17 des Hüllgehäuses 15 vollständig geschlossen ausgebildet ist. Bei Bedarf können allerdings durchaus Sichtfenster zur Funktionsüberwachung ausgespart sein, die dann aber zweckmäßigerweise mittels eines lichtdurchlässigen Materials verschlossen sind.

Beim Ausführungsbeispiel ist von weiterem Vorteil, dass der Kontraktionsantrieb 13 gemeinsam mit der Steuerventileinrichtung 23 und der Ansteuerelektronik 24 zu einer selbsttragenden Baueinheit zusammengefasst ist, die im Folgenden als Antriebs-Baueinheit 53 bezeichnet sei. Diese Antriebs-Baueinheit 53 kann bei der Montage des Ventils 1 durch die bei abgenommenem Abschlussdeckel 18 freigegebene rückseitige Öffnung 54 des Hüllgehäuses 15 hindurch nach Art einer Patrone in das Hüllgehäuse 15 eingeführt werden.

Zweckmäßigerweise fungiert das erste Kopfstück 25 unmittelbar selbst als Träger für die Steuerventileinrichtung 23 und die Ansteuerelektronik 24. Genauer gesagt wird diese Trägerfunktion zweckmäßigerweise von dem Grundkörper 36 übernommen. In diesem Zusammenhang verfügt der Grundkörper 36 beim Ausführungsbeispiel in axialem Anschluss an den mit dem Außengewinde 38 versehenen, den gesamten Querschnitt des Hüllgehäuses 15 ausfüllenden Befestigungsabschnitt 55 über einen im Querschnitt reduzierten, axial zur Rückseite wegragenden Tragabschnitt 56. Der Tragabschnitt 56 ist beim Ausführungsbeispiel hülsenförmig gestaltet und ist vom Einstellstößel 44 koaxial durchsetzt. An seiner radial nach außen orientierten Seitenfläche ist die Steuerventileinrichtung 23 befestigt. Dort könnte auch die Ansteuerelektronik 24 fixiert sein. Letztere ist beim Ausführungsbeispiel allerdings rückseitig am Befestigungsabschnitt 55 angebracht.

Die Steuerventileinrichtung 23 ist an einer rechtwinkelig zur Hauptachse 8 orientierten Montagefläche 57 des Tragabschnittes 56 angebracht. Dort kommuniziert sie mit dem Steuerkanal 34, der ebenso zu der Montagefläche 57 ausmündet wie ein eine Verbindung zu einer externen Druckquelle P ermöglichender Speisekanal 58, der sich wie der Steuerkanal 34 teils in dem Tragabschnitt 56 und teils in dem Einstellstößel 44 erstreckt. Vorzugsweise verläuft der Speisekanal 58 in dem Einstellstößel 44 axial bis zu dessen rückseitiger Stirnfläche 62, wo er so ausmündet, dass eine zum Verbinden der Druckquelle P dienende Fluidleitung 61 anschließbar ist.

Der rückseitig angesetzte Abschlussdeckel 18 verfügt über eine zentrale Aussparung, die von dem Einstellstößel 44 durchgriffen ist, wobei seine rückseitige Stirnfläche 62 zweckmäßigerweise im Wesentlichen bündig mit der stirnseitigen Außenfläche des Abschlussdeckels 18 abschließt.

Die Betätigungskontur 47 kann innerhalb des Mündungsbereiches des Speisekanals 62 realisiert sein.

Die im Stützkörper 37 und im Grundkörper 36 verlaufenden Fluidkanäle 34, 58 sind so ausgebildet, dass eine Fluidverbindung unabhängig von der zwischen den beiden Komponenten eingenommenen relativen Drehposition gewährleistet ist. Dichtungen 60 gewährleisten die erforderliche Abdichtung zwischen den Komponenten 37, 36.

Die Steuerventileinrichtung 23 verfügt auch noch über eine Entlüftungsöffnung 63, die in den rückseitigen Raumabschnitt 52 ausmündet, der über eine Durchbrechung 64 in der Wandung des Hüllgehäuses 15, insbesondere im Abschlussdeckel 18, in ständiger Verbindung mit der Atmosphäre steht.

Bei der Steuerventileinrichtung 23 handelt es sich vorzugsweise um eine kompakt bauende Piezoventileinrichtung. Exemplarisch verfügt sie über eine 3/3-Funktionalität und kann als Proportionalventil betrieben werden. Es ist somit möglich, den im Beaufschlagungsraum 33 herrschenden Innendruck stufenlos variabel vorzugeben, insbesondere auch im Rahmen einer Regelung.

Letzteres wird beim Ausführungsbeispiel dadurch ermöglicht, dass das Ventil 1 mit einer die relativ zum Ventilkopf 4 aktuell eingenommene Position des zweiten Kopfstückes 26 erfassende Detektionseinrichtung 65 ausgestattet ist. Die so erfasste Position entspricht dem aktuell freigegebenen Strömungsquerschnitt, so dass auf diese Weise eine Durchflussregelung verwirklicht werden kann. Über eine gestrichelt angedeutete Leitungsverbindung 66 liefert die Detektionseinrichtung 65 ihre Messwerte an die Ansteuerelektronik 24, die sie bei der Ansteuerung der Steuerventileinrichtung 23 verarbeitet.

Die zur Übertragung der elektrischen Steuersignale an die Steuerventileinrichtung 23 erforderlichen elektrischen Leiter sind in der Zeichnung nicht weiter abgebildet. Sie können durch die Durchbrechung 64 hindurch nach außen geführt sein, um eine elektrische Verbindung zu einer externen elektronischen Steuereinrichtung zu ermöglichen. An diese kann auch die Ansteuerelektronik 24 zum Zwecke des Datenaustausches angeschlossen sein.

Die interne Ansteuerelektronik 24 kann entfallen, wenn die gesamte Ansteuerungsintelligenz in einer externen elektronischen Steuereinrichtung untergebracht ist.

Besondere Vorteile des Ausführungsbeispiels bestehen in der Realisierung des Ventils 1 als Proportionalventil, was eine optimale Dosierbarkeit des beispielsweise als Prozessmedium eingesetzten Fluides garantiert. Der Kontraktionsantrieb 13 eignet sich für die proportionale Betätigung besonders gut, da die Relativposition zwischen den beiden Kopfstücken 25, 26 unmittelbar von der Höhe des im Beaufschlagungsraum 33 herrschenden Fluiddruckes abhängt. Die Realisierung der Steuerventileinrichtung 23 in Piezoventiltechnik begünstigt die Realisierung als proportional arbeitendes Steuerventil und mit kleinen Abmessungen. Da bei der Betätigung des Kontraktionsantriebes 13 keine Reibung auftritt, können die aufgebrachten Fluidkräfte unmittelbar als Stellkräfte zur Steuerung der Position des Ventilgliedes 6 genutzt werden.

## Patentansprüche

1. Ventil, mit einem Ventilkopf (4), in dem Ventilkanäle (2, 3) ausgebildet sind, denen zur Steuerung der Fluidverbindung ein bewegliches Ventilglied (6) zugeordnet ist, und mit einer in Achsrichtung einer Hauptachse (8) von dem Ventilkopf (4) wegragenden Betätigungseinheit (14), die einen in Achsrichtung der Hauptachse (8) ausgerichteten fluidbetätigten Linearantrieb enthält, dessen linear bewegliches Abtriebsteil antriebsmäßig mit dem Ventilglied (6) zusammenwirkt und durch Federmittel (35) in eine das Ventilglied (6) in einer Schließstellung haltenden Grundstellung vorgespannt ist, **dadurch gekennzeichnet, dass** der Linearantrieb ein Kontraktionsantrieb (13) ist, der einen sich axial zwischen zwei Kopfstücken (25, 26) erstreckenden Kontraktionsschlauch (32) aufweist, der bei Fluidbeaufschlagung eines von ihm umschlossenen Beaufschlagungsraumes (33) eine Längenkontraktion erfährt, wobei das eine, erste Kopfstück (25) ortsfest bezüglich des Ventilkopfes (4) abgestützt ist, so dass die Längenkontraktion des Kontraktionsschlauches (32) ein lineares Bewegen des als Abtriebsteil fungierenden anderen, zweiten Kopfstückes (26) in eine ein Verlagern des Ventilgliedes (6) in eine Offenstellung hervorrufende Arbeitsstellung bewirkt.

2. Ventil nach Anspruch 1, **dadurch gekennzeichnet, dass** das Ventilglied (6) in seiner Schließstellung auf einem am Ventilkopf (4) angeordneten Ventilsitz (7) aufliegt und bei deaktiviertem Kontraktionsantrieb (13) durch die Federmittel (35) an den Ventilsitz (7) angedrückt wird.

3. Ventil nach Anspruch 1 oder 2, **dadurch gekennzeichnet, dass** die Federmittel (35) im Sinne eines axialen Auseinanderdrückens zwischen den beiden Kopfstücken (25, 26) wirksam sind und zweckmäβigerweise im Innern des Kontraktionsantriebes (13) in dem von dem Kontraktionsschlauch (32) umschlossenen Raum angeordnet sind.

4. Ventil nach einem der Ansprüche 1 bis 3, **dadurch gekennzeichnet, dass** das erste Kopfstück (25) in Achsrichtung der Hauptachse (8) relativ zum Ventilkopf (4) verstellbar und variabel in verschiedenen Arbeitspositionen ortsfest bezüglich des Ventilkopfes (4) positionierbar ist.

5. Ventil nach einem der Ansprüche 1 bis 4, **dadurch gekennzeichnet, dass** das erste Kopfstück (25) einen ortsfest bezüglich des Ventilkopfes (4) abgestützten Grundkörper (36) aufweist, der einen axial verstellbaren und bezüglich des Grundkörpers (36) in unterschiedlichen axialen Arbeitspositionen positionierbaren Stützkörper (37) trägt, an dem sich die Federmittel (35) seitens des ersten Kopfstückes (25) abstützen, derart, dass die Vorspannung der Federmittel (35) durch Verändern der Arbeitsposition des Stützkörpers (37) variierbar ist, wobei der Stützkörper (37) zweckmäβigerweise einen den Grundkörper (36) axial durchsetzenden Einstellstößel (44) aufweist, der zum Einstellen der Arbeitsposition des Stützkörpers (37) von der dem Ventilkopf (4) entgegengesetzten Seite her betätigbar ist.

6. Ventil nach Anspruch 5, **dadurch gekennzeichnet, dass** der Stützkörper (37) mit dem Grundkörper (36) in Gewindeeingriff steht, so dass sein Verdrehen eine Veränderung seiner bezüglich des Grundkörpers (36) eingenommenen Arbeitsposition bewirkt.

7. Ventil nach einem der Ansprüche 1 bis 6, **dadurch gekennzeichnet, dass** die Betätigungseinheit (14) ein einenends am Ventilkopf (4) fixiertes und ausgehend von dort in Achsrichtung der Hauptachse (8) vom Ventilkopf (4) wegragendes Hüllgehäuse (15) aufweist, das den Kontraktionsantrieb (13) aufnimmt und das zweckmäβigerweise rohrförmig ausgebildet ist.

8. Ventil nach Anspruch 7, **dadurch gekennzeichnet, dass** die Seitenwand (17) des Hüllgehäuses (15) vollständig geschlossen ausgebildet ist.

9. Ventil nach Anspruch 7 oder 8, **dadurch gekennzeichnet, dass** das erste Kopfstück (25) an dem Hüllgehäuse (15) und über dieses bezüglich dem Ventilkopf (4) ortsfest abgestützt ist, wobei das erste Kopfstück (25) zweckmäβigerweise zur Veränderung seiner Arbeitsposition bezüglich dem Hüllgehäuse (15) axial verstellbar ist, insbesondere indem es über einen Grundkörper (36) mit der Innenumfangsfläche (28) des Hüllgehäuses (15) in Gewindeeingriff steht.

10. Ventil nach einem der Ansprüche 1 bis 9, **dadurch gekennzeichnet, dass** die Betätigungseinheit (14) eine elektrisch betätigbare Steuerventileinrichtung (23) zur Steuerung des Betriebszustandes des Kontraktionsantriebes (13) aufweist, die insbesondere auf piezoelektrischem Arbeitsprinzip basiert.

11. Ventil nach Anspruch 10, **dadurch gekennzeichnet, dass** die Betätigungseinheit (14) eine zur Ansteuerung der Steuerventileinrichtung (23) dienende Ansteuerelektronik (24) aufweist, wobei das Ventil zweckmäβigerweise eine mit der Ansteuerelektronik (24) kommunizierende, die aktuelle Position des zweiten Kopfstückes (26) detektierende Detektionseinrichtung (65) aufweist.

12. Ventil nach Anspruch 10 oder 11, **dadurch gekennzeichnet, dass** der Kontraktionsantrieb (13) zusammen mit der Steuerventileinrichtung (23) und zweckmäßigerweise auch der Ansteuerelektronik (24) zu einer Antriebs-Baueinheit (53) zusammengefasst ist.

13. Ventil nach Anspruch 12 in Verbindung mit einem der Ansprüche 7 bis 9, **dadurch gekennzeichnet, dass** die Antriebs-Baueinheit (53) patronenartig in das Hüllgehäuse (15) eingesetzt ist, wobei zweckmäßigerweise die Steuerventileinrichtung (23) auf der dem Ventilkopf (4) entgegengesetzten Axialseite des Kontraktionsantriebes (13) in dem Hüllgehäuse (15) angeordnet ist.

14. Ventil nach Anspruch 12 oder 13, **dadurch gekennzeichnet, dass** die Steuerventileinrichtung (23) und zweckmäßigerweise auch die Ansteuerelektronik (24) von dem ersten Kopfstück (25) des Kontraktionsantriebes (13) getragen sind.

15. Ventil nach einem der Ansprüche 10 bis 14, **dadurch gekennzeichnet, dass** die Steuerventileinrichtung (23) eine Proportional-Steuerventileinrichtung ist.

## Claims

1. Valve, with a valve head (4), in which are formed valve passages (2, 3) to which is assigned a movable valve member (6) for control of the fluidic connection, and with an actuating unit (14) extending away from the valve head (4) in the axial direction of a main axis (8) and containing a fluid-actuated linear drive, aligned in the axial direction of the main axis (8), with an output member moving linearly and working in conjunction with the valve member (6) and biased by spring means (35) in a basic position holding the valve member (6) in a closed position, **characterised in that** the linear drive is a contraction drive (13) which has a contraction tube (32) extending axially between two head pieces (25, 26) and which, under fluidic pressurisation of a pressurisation chamber (33) encompassing it, undergoes a contraction in length, wherein the one, first head piece (25) is supported immovably relative to the valve head (4), so that the contraction in length of the contraction tube (32) causes a linear movement of the other, second head piece (26) functioning as output member into an operating position generating a displacement of the valve member (6) into an open position.

2. Valve according to claim 1 **characterised in that**, in its closed position, the valve member (6) lies on a valve seat (7) located on the valve head (4) and with the contraction drive (13) deactivated, is pressed on to the valve seat (7) by the spring means (35).

3. Valve according to claim 1 or 2, **characterised in that** the spring means (35) are operative in the direction of an axial pressing apart between the two head pieces (25, 26), and expediently are mounted inside the contraction drive (13) in the space encompassed by the contraction tube (32).

4. Valve according to any of claims 1 to 3, **characterised in that** the first head piece (25) is adjustable relative to the valve head (4) in the axial direction of the main axis (8), and may be positioned variably in different operating positions, immovably relative to the valve head (4).

5. Valve according to any of claims 1 to 4, **characterised in that** the first head piece (25) has a base body (36) supported immovably relative to the valve head (4) and carrying a support body (37), axially adjustable and able to be positioned relative to the base body (36) in different axial operating positions, on which the spring means (35) rest at the side of the first head piece (25) in such a way that the bias of the spring means (35) may be varied by changing the operating position of the support body (37), wherein the support body (37) expediently has an adjusting plunger (44) passing axially through the base body (36) and which may be actuated from the side opposite the valve head (4) to adjust the operating position of the support body (37).

6. Valve according to claim 5, **characterised in that** the support body (37) is in threaded engagement with the base body (36), so that its rotation effects a change in its operating position relative to the base body (36).

7. Valve according to any of claims 1 to 6, **characterised in that** the actuating unit (14) has an enveloping casing (15), fixed at one end to the valve head (4) and extending from there away from the valve head (4) in the axial direction of the main axis (8), which accommodates the contraction drive (13) and is expediently tubular in shape.

8. Valve according to claim 7, **characterised in that** the side wall (17) of the enveloping casing (15) is completely closed.

9. Valve according to claim 7 or 8, **characterised in that** the first head piece (25) is supported on the enveloping casing (15) and via the latter immovably relative to the valve head (4), wherein the first head piece (25) is expediently adjustable relative to the enveloping casing (15) in order to change its operating position, in particular since it it in threaded engagement with the inner peripheral surface (28) of the enveloping casing (15) via a base body (36).

10. Valve according to any of claims 1 to 9, **characterised in that** the actuating unit (14) has an electrically operable control valve device (23) to control the operating state of the contraction drive (13), based in particular on a piezoelectric operating principle.

11. Valve according to claim 10, **characterised in that** the actuating unit (14) has driving circuits (24) for driving the control valve device (23), wherein the valve expediently has a detection unit (65) communicating with the driving circuits (24) and detecting the current position of the second head piece (26).

12. Valve according to claim 10 or 11, **characterised in that** the contraction drive (13) is combined with the control valve device (23) and expediently also with the driving circuits (24) to form a drive assembly (53).

13. Valve according to claim 12 in conjunction with any of claims 7 to 9, **characterised in that** the drive assembly (53) is inserted like a cartridge in the enveloping casing (15), wherein expediently the control valve device (23) is mounted in the enveloping casing (15) on the axial side of the contraction drive (13) opposite the valve head (4).

14. Valve according to claim 12 or 13, **characterised in that** the control valve device (23) and expediently also the driving circuits (24) are carried by the first head piece (25) of the contraction drive (13).

15. Valve according to any of claims 10 to 14, **characterised in that** the control valve device (23) is a proportional control valve device.

## Revendications

1. Soupape, avec une tête de soupape (4), dans laquelle des canaux de soupape (2, 3) sont réalisés, auxquels est associé un organe de soupape (6) mobile pour la commande de la liaison fluidique, et avec une unité d'actionnement (14) dépassant de la tête de soupape (4) dans le sens axial d'un axe principal (8), laquelle unité contient un entraînement linéaire actionné par fluide orienté dans le sens axial de l'axe principal (8), dont la partie de sortie mobile linéairement coagit en entraînement avec l'organe de soupape (6) et est précontrainte par des moyens de ressort (35) dans une position de base maintenant l'organe de soupape (6) dans une position de fermeture, **caractérisée en ce que** l'entraînement linéaire est un entraînement par contraction (13) qui présente un tuyau de contraction (32) s'étendant axialement entre deux têtes (25, 26), lequel tuyau subit une contraction longitudinale en cas de sollicitation fluidique d'un espace de sollicitation (33) entouré par celui-ci, sachant que l'une, première tête (25) est appuyée fixement par rapport à la tête de soupape (4) de sorte que la contraction longitudinale du tuyau de contraction (32) provoque un déplacement linéaire de l'autre, seconde tête (26) fonctionnant comme partie de sortie dans une position de travail suscitant un déplacement de l'organe de soupape (6) dans une position ouverte.

2. Soupape selon la revendication 1, **caractérisée en ce que** l'organe de soupape (6) repose dans sa position de fermeture sur un siège de soupape (7) disposé sur la tête de soupape (4) et est pressé contre le siège de soupape (7) par les moyens de ressort (35) en cas d'entraînement par contraction (13) désactivé.

3. Soupape selon la revendication 1 ou 2, **caractérisée en ce que** les moyens de ressort (35) sont actifs au sens d'un écartement axial entre les deux têtes (25, 26) et sont disposés de manière appropriée à l'intérieur de l'entraînement par contraction (13) dans l'espace entouré par le tuyau de contraction (32).

4. Soupape selon l'une quelconque des revendications 1 à 3, **caractérisée en ce que** la première tête (25) peut être déplacée dans le sens axial de l'axe principal (8) par rapport à la tête de soupape (4) et peut être positionnée de manière variable dans différentes positions de travail fixement par rapport à la tête de soupape (4).

5. Soupape selon l'une quelconque des revendications 1 à 4, **caractérisée en ce que** la première tête (25) présente un corps de base (36) appuyé fixement par rapport à la tête de soupape (4), lequel porte un corps d'appui (37) réglable axialement et pouvant être positionné par rapport au corps de base (36) dans différentes positions de travail axiales, contre lequel les moyens de ressort (35) s'appuient du côté de la première tête (25) de telle manière que la précontrainte des moyens de ressort (35) puisse être variée par la modification de la position de travail du corps d'appui (37), sachant que le corps d'appui (37) présente de manière appropriée un coulisseau de réglage (44) traversant axialement le corps de base (36), lequel peut être actionné pour le réglage de la position de travail du corps d'appui (37) depuis le côté opposé à la tête de soupape (4).

6. Soupape selon la revendication 5, **caractérisée en ce que** le corps d'appui (37) est en engagement fileté avec le corps de base (36) de sorte que sa rotation provoque une modification de sa position de travail occupée par rapport au corps de base (36).

7. Soupape selon l'une quelconque des revendications 1 à 6, **caractérisée en ce que** l'unité d'actionnement (14) présente un boîtier d'enveloppe (15) fixé sur une extrémité sur la tête de soupape (4) et dépassant à partir de là dans le sens axial de l'axe principal (8) de la tête de soupape (4), lequel boîtier reçoit l'entraînement par contraction (13) et est réalisé de manière appropriée en forme de tube.

8. Soupape selon la revendication 7, **caractérisée en ce que** la paroi latérale (17) du boîtier d'enveloppe (15) est réalisée complètement fermée.

9. Soupape selon la revendication 7 ou 8, **caractérisée en ce que** la première tête (25) est en appui fixement contre le boîtier d'enveloppe (15) et au-dessus de celui-ci par rapport à la tête de soupape (4), sachant que la première tête (25) peut être déplacée axialement de manière appropriée pour la modification de sa position de travail par rapport au boîtier d'enveloppe (15), en particulier du fait qu'elle est en engagement fileté par un corps de base (36) avec la surface périphérique intérieure (28) du boîtier d'enveloppe (15).

10. Soupape selon l'une quelconque des revendications 1 à 9, **caractérisée en ce que** l'unité d'actionnement (14) présente un dispositif de soupape de commande (23) actionnable électriquement pour la commande de l'état de fonctionnement de l'entraînement par contraction (13) qui se base en particulier sur le principe de travail piézoélectrique.

11. Soupape selon la revendication 10, **caractérisée en ce que** l'unité d'actionnement (14) présente une électronique de commande (24) servant à la commande du dispositif de soupape de commande (23), sachant que la soupape présente de manière appropriée un dispositif de détection (65) communiquant avec l'électronique de commande (24), détectant la position actuelle de la seconde tête (26).

12. Soupape selon la revendication 10 ou 11, **caractérisée en ce que** l'entraînement par contraction (13) est réuni conjointement avec le dispositif de soupape de commande (23) et de manière appropriée aussi l'électronique de commande (24) en une unité de construction d'entraînement (53).

13. Soupape selon la revendication 12 en liaison avec l'une quelconque des revendications 7 à 9, **caractérisée en ce que** l'unité de construction d'entraînement (53) est insérée comme une cartouche dans le boîtier d'enveloppe (15), sachant que le dispositif de soupape de commande (23) est agencé de manière appropriée sur le côté axial opposé à la tête de soupape (4) de l'entraînement par contraction (13) dans le boîtier d'enveloppe (15).

14. Soupape selon la revendication 12 ou 13, **caractérisée en ce que** le dispositif de soupape de commande (23) et de manière appropriée aussi l'électronique de commande (24) sont portés par la première tête (25) de l'entraînement par contraction (13).

15. Soupape selon l'une quelconque des revendications 10 à 14, **caractérisée en ce que** le dispositif de soupape de commande (23) est un dispositif de soupape de commande proportionnelle.
